# EUROPEAN PATENT APPLICATION

(11) **EP 1 992 791 A2**
(43) Date of publication of application: **19.11.2008**
(21) Application number: 08006044.5
(22) Date of filing: 28.03.2008
(51) Int. Cl.: F01K 3/20, F01K 11/02, F01K 13/00

(54) **Thermal power plant**

(30) Priority: 30.03.2007 JP 2007092286
(71) Applicant: Kabushiki Kaisha Toshiba, Minato-ku, Tokyo 105-8001 (JP)
(72) Inventor: Kawarami, Hiroshi, Tokyo (JP); Hattori, Nobuhiko, Tokyo (JP)
(74) Representative: Siegert, Georg

(57) **Abstract**

By improving a turbine efficiency, a power generation efficiency can be easily improved. The thermal power plant of the present invention comprises, for example; a boiler 1 that heats a feed water by utilizing a heat caused by combustion of a fossil fuel so as to generate a main steam A; reheaters 41 and 42 installed In the boiler 1; a turbine 2; and a generator 13 connected to the turbine 2. The turbine 2 includes: a high pressure turbine into which the main steam A from the boiler 1 is introduced; an intermediate pressure turbine 9 into which the reheated steams E and F generated by the reheaters 41 and 42 are introduced, the intermediate pressure turbine 9 being uniaxially connected to the high pressure turbine 8; and a low pressure turbine 11 Into which the reheated steams E and F discharged from the intermediate pressure turbine 9 is introduced, the low pressure turbine 11 being coupled with the high pressure turbine 8 and the intermediate pressure turbine 9, The generator 7 has more than two poles, and is coupled with the high pressure turbine 8, the intermediate pressure turbine 9, and the low pressure turbine 11.

## Description

### CROSS-REFERENCE TO RELATED APPLICATION

This application claims priority to Japanese Patent Application No. 2007-92286 filed on March 30 2007, and the whole description in Application No. 2007-92286 is incorporated herein by reference.

### BACKGROUND OF THE INVENTION

### Field of the Invention

The present invention relates to a thermal power plant capable of improving a power generation efficiency by increasing a steam temperature and a turbine efficiency.

### Background Art

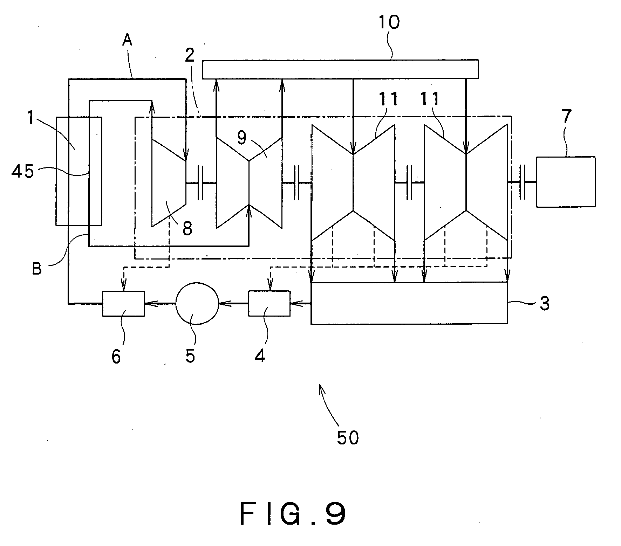

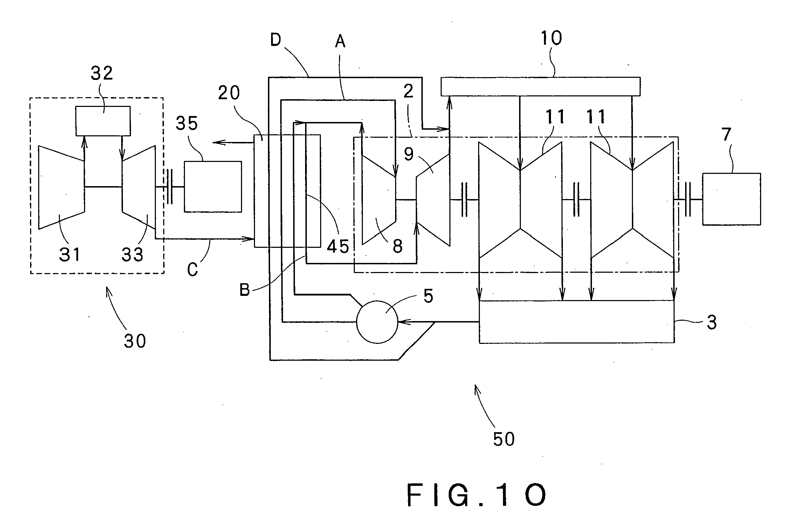

Conventional thermal power plants are classified into a conventional-type thermal power plant shown in Fig. 9 including a steam turbine system 50 of a reheat regenerative Rankine cycle, and a combined thermal power plant shown in Fig. 10 in which a gas turbine system 30 and a steam turbine system 50 are combined with each other, the steam turbine system 50 being driven by using a steam heated by an exhaust gas C discharged from the gas turbine system 30.

As shown in Fig. 9, the conventional-type thermal power plant of a reheat regenerative Rankine cycle includes: a boiler 1 that generates a steam by using a heat caused by combustion of a fossil fuel; a turbine 2 that is rotated by using steams A and B discharged from the boiler 1; a condenser 3 that collects the steams used in the turbine 2; a low-pressure feed water heater 4 that heats a water supplied from the condenser 3; a feed water pump 5 that increases a pressure of the water heated by the low-pressure feed water heater 4; a high-pressure feed water heater 6 that heats the water from the feed water pump 5; and a generator 7 that is connected to the turbine 2.

As shown in Fig. 9, the turbine 2 includes: a high pressure turbine 8 into which the main steam A from the boiler 1 is introduced; an intermediate pressure turbine 9 into which the reheated steam B, which was discharged from the high pressure turbine 8 and was then reheated by a reheater 45 in the boiler 1, is introduced; and low pressure turbines 11 into which the reheated steam B, which was discharged from the intermediate pressure turbine 9, is introduced through a crossover pipe (connecting pipe) 10.

In Fig. 9, the main steam A having been generated by the boiler 1 is introduced into the high pressure turbine 8 in which the main steam A is expanded, and is discharged therefrom. The main steam A is reheated by the reheater 45 in the boiler 1 to become the reheated steam B which then enters into the intermediate pressure turbine 9. The reheated steam B, which was expanded in the intermediate pressure turbine 9 and was discharged therefrom, is introduced, as a low pressure steam, into the respective low pressure turbines 11 through the crossover pipe (connecting pipe) 10. The low pressure steam, which has been introduced into each of the low pressure turbines 11 is expanded in the low pressure turbine 11, and is introduced, as an exhaust steam, into the condenser 3 in which the exhaust steam is cooled and condensed, i.e., the exhaust steam is returned to water. Following thereto, the water supplied from the condenser 3 is heated by the low-pressure feed water heater 4. Then, a pressure of the water is increased by the feed water pump 5, and thereafter, the water is heated by the high-pressure feed water heater 6. Finally, the water is returned to the boiler 1.

As shown in Fig. 10, the gas turbine system 30 of the combined thermal power plant includes; a compressor 31 that compresses air; a combustor 32 that burns a fuel by using the air compressed by the compressor 31 so as to generate a combustion gas; a gas turbine 33 that is driven by the combustion gas generated by the combustor 32; and a gas turbine generator 35 that is connected to the gas turbine 33. The steam turbine system 50 of the combined thermal power plant includes: an heat recovery steam generator (HRSG) 20 that generates a main steam A, a reheated steam B, and a low pressure steam D, by an exhaust gas C discharged from the gas turbine system 30; a turbine 2 that is rotated by using the steams A, B, and D discharged from heat recovery steam generator (HRSG) 20; a condenser 3 that collects the steams used in the turbine 2; a feed water pump 5 that increases a pressure of the water supplied from the condenser 3; and a generator connected to the turbine 2.

As shown in Fig. 10, the turbine 2 includes: a high pressure turbine 8 into which the main steam A from heat recovery steam generator (HRSG) 20 is introduced; an intermediate pressure turbine 9 into which the reheated steam B, which was discharged from the high pressure turbine 8 and was reheated by a reheater 45 in heat recovery steam generator (HRSG) 20, is introduced; and low pressure turbines 11 into which the reheated steam B, which was discharged from the intermediate pressure turbine 9, is introduced thorough a crossover pipe (connecting pipe) 10.

In Fig. 10, the main steam A discharged from heat recovery steam generator (HRSG) 20 is passed through the high pressure turbine 8, and is reheated by the reheater 45 in heat recovery steam generator (HRSG) 20 to become the reheated steam B which then enters into the intermediate pressure turbine 9. The steam discharged from the intermediate pressure turbine 9 is mixed with the low pressure steam D, and is distributed to the low pressure turbines 11 through the crossover pipe 10. Then, the distributed steams reach the condenser 3 in which the steams return to water. The water supplied from the condenser 3 is branched at an upstream position and a downstream position of the feed water pump 5, so as to become waters of different pressures, namely, high pressure water, an intermediate pressure water, and a low pressure water, which are then returned to heat recovery steam generator (HRSG) 20.

In order to improve a power generation efficiency of a thermal power plant, increase in steam temperature and Improvement in turbine efficiency are significantly advantageous.

Regarding the steam temperature, a steam temperature exceeding 600°C has been recently used in the thermal power plants. Since increase in steam temperature can realize a highly effective power generation, a further increase in steam temperature is continuously expected. On the other hand, as an important factor for contributing the improvement in turbine efficiency, there can be taken, by way of example, reduction in exhaust loss, which can be achieved by elongating a length of a last-stage moving blade. At present, in a full speed machine of 60 Hz utilizing a 2-pole generator, a length of the moving blade of the last stage is as large as about 1.0 m when the moving blade is made of a stainless steel, or about 1.1 m when the moving blade is made of a titanium alloy.

However, when employing these arts for improving the power generation efficiency, i.e., increase of a steam temperature or elongation of a length of a last-stage moving blade, there are required not only an advanced design for fluid and strength and a cooling technique, but also a material of a high strength, which greatly increases a developing cost and extends a developing term therefor.

When the steam temperature is increased in order to attain an effective power generation, a strength of a rotational shaft (rotor) of a turbine made of a steel alloy such as stainless steel, which is currently used, cannot withstand, Introduction of a thermal power plant having a steam condition as high as 650°C is expected in the near future. In such a thermal power plant, use of a super alloy such as a nickel-based alloy as a material for a rotational shaft of a turbine is indispensable, in order to secure the strengths of the rotational shafts of the high pressure turbine and the intermediate pressure turbine which undergo a high temperature. However, it is difficult to manufacture a large super alloy steel ingot, and a large manufacturing cost is required therefor. Thus, it takes a lot of time before such a super alloy can be practically applied.

On the other hand, regarding the elongation of the last-stage turbine moving blade, the length of the moving blade now nearly reaches the limit of withstanding a centrifugal force. Thus, further reduction in exhaust loss achieved by the further elongation of the moving blade also comes near the limit.

It can be considered that, with a view to reducing the exhaust loss, the number of exhaust steams of the low pressure turbines is increased while unchanging the length of last-stage turbine moving blade, i.e., low pressure steams are respectively distributed and introduced to the plurality of pressure turbines. However, since this structure decreases a flowrate per flow, a length of the moving blade of a first half stage of the low pressure turbine, which Invites deterioration in performance of the turbine. In addition, since the number of the low pressure turbines is increased, a larger cost is necessary.

It has been conventionally known to reduce a rotating speed of the low pressure turbine to half (to make a half speed machine) as compared with that of a full speed machine, so as to increase a power generation efficiency (JP2004-137912A, for example). However, in the invention described in JP2004-137912A, the high pressure turbine and the low pressure turbine are directly connected to different generators, which is referred to as so-called "cross-compound type".

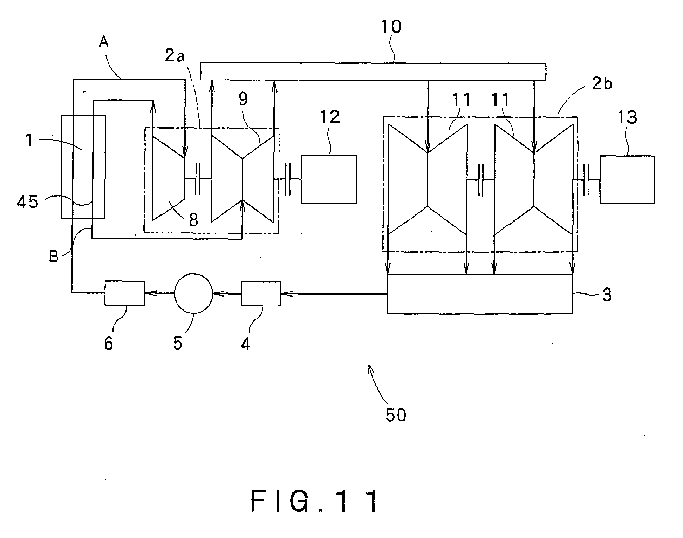

Even a current thermal power plant of 1000 MW class sometimes employs the cross-compound type with two rotational shafts. That is, as shown in Fig. 11, there are arranged in parallel a 2-pole generator 12 to which a turbine 2a including a high pressure turbine (single flow) 8 and an intermediate pressure turbine (double flow) 9 is directly connected, and a 4-pole generator 13 to which a turbine 2b including two low pressure turbines (double flow) 11 is directly connected. In Fig. 11, the parts which are the same parts as shown in Figs. 10 and 9 are shown by the same reference numbers.

However, in the above-described steam turbine system 50 of a cross-compound type, since it is necessary to electrically synchronize the two generators 12 and 13, a complicated control system is required, resulting in deterioration in operability. In addition, since the two shafts are arranged in parallel, a turbine building (not shown) has to be made larger.

Further, the generator directly connected to the high pressure turbine 8 and the intermediate pressure turbine 9 which undergo a high temperature is the 2-pole generator 12 of a higher rotational speed. Thus, when a conventional alloy steel is used as a material for a rotational shaft, it will be difficult to increase the steam temperature in the future, in terms of the strength of the rotational shaft of the turbine 2a.

### SUMMARY OF THE INVENTION

The present invention has been made in view of these circumstances. The object of the present invention is to provide a thermal power plant capable of easily improving power generation efficiency, by improving turbine efficiency,

The present invention is a thermal power plant comprising: a boiler that heats a feed water by utilizing a heat caused by combustion of a fossil fuel so as to generate a main steam; a high pressure turbine into which the main steam from the boiler is introduced, the high pressure turbine having a rotational shaft; a reheater that reheats the main steam discharged from the high pressure turbine so as to generate a reheated steam; an Intermediate pressure turbine into which the reheated steam generated by the reheater is introduced, the intermediate pressure turbine having a rotational shaft that is coupled with the rotational shaft of the high pressure turbine; a low pressure turbine into which the reheated steam discharged from the intermediate pressure turbine is introduced, the low pressure turbine having a rotational shaft that is coupled with the rotational shafts of the high pressure turbine and the intermediate pressure turbine; and a generator having more than two poles, and having a rotational shaft that is coupled with the rotational shafts of the high pressure turbine, the intermediate pressure turbine, and the turbine.

### BRIEF DESCRIPTION OF THE DRAWINGS

Fig. 1 is a schematic view of a thermal power plant in a first embodiment of the present invention.
Fig. 2 is a side sectional view of the thermal power plant in the first embodiment of the present invention.
Fig. 3 is a graph showing a relationship between a centrifugal stress applied to a first-stage turbine moving blade of a high pressure turbine, and an allowable stress of a chrome steel.
Fig. 4 is a schematic view of an alternative example of the thermal power plant in the first embodiment of the present invention.
Fig. 5 is a schematic view of a thermal power plant in a second embodiment of the present invention.
Fig. 6 is a schematic view of another alternative example of the thermal power plant in the first embodiment of the present invention.
Fig. 7 is a schematic view of a thermal power plant in a third embodiment of the present invention.
Fig. 8 is a side sectional view of the thermal power plant in the third embodiment of the present invention.
Fig. 9 is a schematic view of a conventional thermal power plant including a steam turbine system of a reheat regenerative Rankine cycle.
Fig. 10 is a schematic view of a conventional combined thermal power plant in which a gas turbine system and a steam turbine system are combined.
Fig. 11 is a schematic view of a thermal power plant of a cross-compound type.

### DESCRIPTION OF THE PREFERRED EMBODIMENTS

### First Embodiment

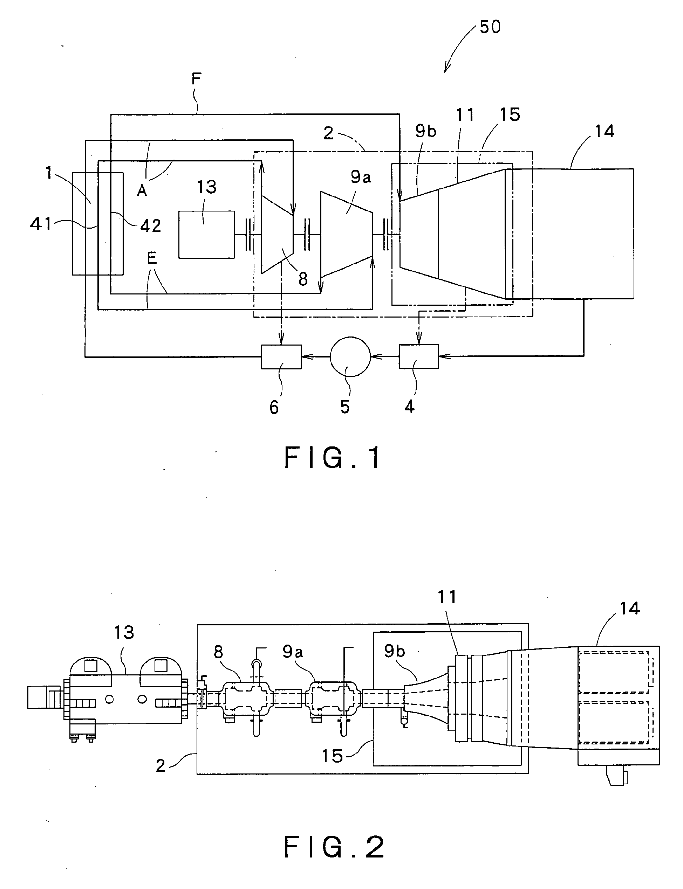

A thermal power plant in a first embodiment of the present invention is described below with reference to the drawings. Figs. 1 to 4 show a first embodiment of the present invention.

As shown in Figs. 1 and 2, a steam turbine system 50 of a thermal power plant in a first embodiment of the present Invention includes a boiler 1, a turbine 2, a condenser 14, and a 4-pole generator 13. The boiler 1 has a heater that heats a feed water by using a heat caused by combustion of a fossil fuel to generate a main steam A. In this embodiment, the boiler 1 is preferably a furnace utilizing coal or oil as a fuel. In this embodiment, the boiler 1 has a first reheater 41 and a second reheater 42, other than the heater that generates main steam A. First reheater 41 reheats the main steam A discharged from a high pressure turbine 8 so as to generate a first-stage reheated steam E. Second reheater 42 reheats the first-stage reheated steam E discharged from a first intermediate pressure turbine 9a so as to generate a second-stage reheated steam F.

The turbine 2 includes the high pressure turbine 8, the first intermediate pressure turbine 9a, and an intermediate and low pressure turbine 15. The main steam A is introduced to high pressure turbine 8. Intermediate and low pressure turbine 15 further includes a second intermediate pressure turbine 9b and a low pressure turbine 11. In this embodiment, the second intermediate pressure turbine 9b and the low pressure turbine 11 are continuously arranged, as intermediate and low pressure turbine 15, without any connection pipe such as a crossover pipe. Namely, in this embodiment, the second intermediate pressure turbine 9b and the low pressure turbine 11 are installed in a single casing. The second intermediate pressure turbine 9b and the low pressure turbine 11 disposed in the single casing constitute the single intermediate and low pressure turbine 15. In this case, the turbine into which the second-stage reheated steam F is introduced can be defined as the second intermediate pressure turbine 9b, and the turbine that discharges a steam as an exhaust steam into the condenser 14 can be defined as the low pressure turbine 11. It is not necessary to strictly define a boundary between the second intermediate pressure turbine 9b and the low pressure turbine 11. Such a strict separation of the second intermediate pressure turbine 9b and the low pressure turbine 11 can be suitably determined by those skilled in the art based on a design condition or the like. The single casing of intermediate and low pressure turbine 15, which disposes the second intermediate pressure turbine 9b and the low pressure turbine 11, may be formed of different kinds of materials that are integrated by welding or are fastened by bolts, as long as the casing has a single (one-piece) structure without pipes between the second intermediate pressure turbine 9b and the low pressure turbine 11.

As shown in Figs. 1 an 2, in a power train of the steam turbine system 50 in this embodiment, there are uniaxially arranged the 4-pole generator 13, the high pressure turbine 8, the first intermediate pressure turbine 9a, and the intermediate and low pressure turbine 15 (the second intermediate pressure turbine 9b and the low pressure turbine 11) which are connected to each other in this order. That is, rotational shafts of the high pressure turbine 8, the first Intermediate pressure turbine 9a, the intermediate and low pressure turbine 15, and the 4-pole generator 13 are coupled with each other to form a uniaxial structure. Thus, the steam turbine system 50 has the common and single rotational shaft.

The rotational shaft of the 4-pole generator 13 is connected to the rotational shaft of the high pressure turbine 8, and the 4-pole generator 13 is disposed adjacent to the high pressure turbine 8. The condenser 14 is disposed to be adjacent to the low pressure turbine 11 of the intermediate and low pressure turbine 15. Since the low pressure turbine 11 of the intermediate and low pressure turbine 15 and the condenser 14 are disposed adjacent to each other, a turbine exhaust steam from the low pressure turbine 11 of the intermediate and low pressure turbine 15 is axially discharged, i.e., in an axial direction of the rotational shaft while remaining to be a single flow, and thus can be smoothly introduced into the condenser 14.

The steam turbine system 50 in this embodiment further includes a low-pressure feed water heater 4, a feed water pump 5 and a high-pressure feed water heater 6. Low-pressure feed water heater 4 heats a water supplied from the condenser 14 by utilizing heat extracted from low pressure turbine 11. Feed water pump 5 pressurizes the water heated by the low-pressure feed water heater 4 as a feed water. High-pressure feed water heater 6 further heats the feed water by utilizing heat extracted from high pressure turbine 8. Namely, low-pressure extracted steam from the low pressure turbine 11, as a heating medium, is Introduced into the low-pressure feed water heater 4. A high-pressure extracted steam from the high pressure turbine 8, as a heating medium, is introduced into the high-pressure feed water heater 6. So, low-pressure feed water heater 4 and high-pressure feed water heater 6 are serves as regenerative heat exchangers. Here, the regenerative heat exchanger is defined as a heat exchanger that heats feed water by utilizing heat of extracted steam from turbine 2. Therefore, a thermodynamic cycle of the steam turbine plant 50 is a reheat regenerative Rankine cycle because the reheater, such as a first reheater 41 or a second reheater 42, and the regenerative heat exchanger, such as low-pressure feed water heater 4 or high-pressure feed water heater 8, are provided in the steam turbine system 50.

As described above, the steam turbine system 50 of the thermal power plant in this embodiment, rotational shafts of each turbine and generator are coupled as the common and single rotational shaft, and the 4-pole generator 13 serves as a generator. Thus, as compared with a conventional steam turbine system using a 2-pole generator (hereinafter also referred to as "full speed machine"), a rotational speed thereof is reduced to half (hereinafter the steam turbine system 50 of the present invention is also referred to as "half speed machine").

The rotational speed of the half speed machine is half the rotational speed of the full speed machine. So, a length of the last-stage moving blade of the low pressure turbine 11 can be easily doubled based on the law of similitude from the full speed machine to the half speed machine, without conducting a new development, which requires an enormous work and period.

The law of similitude, as described above, is a principle often applied when designing a gas turbine or the like, For example, applying this principle, a design for a gas turbine for 50 Hz can be obtained by multiplying a design of a gas turbine for 60 Hz by 1.2. A turbine which is designed based on the law of similitude has the same velocity field and the same stress field as those of the original turbine.

Next, an operation of this embodiment is explained below.

At first, a water (feed water), which is supplied from the feed water pump 5 to the boiler 1 via the high-pressure feed water heater 6, is heated in the heater provided in boiler 1, so that a main steam A is generated in boiler 1. The main steam A is introduced into the high pressure turbine 8. The main steam A is expanded in high pressure turbine 8 so as to rotate the rotational shaft (rotor), and is discharged therefrom. The main steam A discharged from the high pressure turbine 8 is introduced to the first reheater 41 provided in the boiler 1 and reheated so as to generate a first-stage reheated steam E. The first-stage reheated steam E then enters into the first intermediate pressure turbine 9a (see, Fig. 1).

Then, the first-stage reheated steam E, which is expanded so as to generate work in the first intermediate pressure turbine 9a and discharged therefrom, returns again to the boiler 1. The first-stage reheated steam E after discharged from first intermediate pressure turbine 9a, is introduced reheated in the second reheater 42 provided in the boiler 1 so as to generate a second-stage reheated steam F. The second-stage reheated steam F then enters into the second Intermediate pressure turbine 9b of the intermediate and low pressure turbine 15 (see, Fig. 1).

Then, the second-stage reheated steam F, which is expanded so as to generate work in the second intermediate pressure turbine 9b and discharged therefrom, flows into the low pressure turbine 1.1, which is disposed adjacent to the second intermediate pressure turbine 9b in the same casing, as described above. The second-stage reheated steam f, after discharged from second intermediate pressure turbine 9b, is further expanded so as to generate work in the low pressure turbine 11. Steam discharged form low pressure turbine 11 is introduced to the condenser 14 (see, Fig. 1).

In this embodiment, the low pressure turbine 11 of the intermediate and low pressure turbine 15 and the condenser 14 are disposed adjacent to each other. Thus, a turbine exhaust steam from the low pressure turbine 11 of the intermediate and low pressure turbine 15 is axially discharged in a single flow. In other words, discharged steam from the low pressure turbine 11 flows in a one direction having a velocity component of an axial direction of the rotational shaft. Thus, discharged steam from low pressure turbine 11 can be smoothly introduced into the condenser 14. The steam introduced in condenser 14 condenses as a condensate (water).

The water (condensate) discharged from the condenser 14 is heated by the low-pressu re feed water heater 4 by using a extracted steam extracted from the low pressure turbine 11 as a heat source (see, Fig. 1).

The water heated by the low-pressure feed water heater 4 is then pumped (pressurized)in the feed water pump 5 as a feed water, Subsequently, the feed water from the feed water pump 5 is heated in the high-pressure feed water heater 6 by using a steam extracted from the high pressure turbine 8 as a heat source. The feed water from high-pressure feed water heater 6 is then returned to the boiler 1 (see, Fig. 1).

In this manner, while the water (including condensate and feed water) and the steams A, E, and F are circulated in the steam turbine system 50, the rotational shaft of the 4-pole generator 13, which is coupled with the rotational shaft of turbine 2, rotates. Since the 4-pole generator 13 has more than two poles, rotational speeds of the 4-pole generator 13 and the turbine 2 connected thereto are smaller than those of a conventional turbine system having a 2-pole generator. Specifically, with the use of the 4-pole generator 13, the rotational speeds of the 4-pole generator 13 and the turbine 2 are half speeds as compared to the conventional turbine system having the 2-pole generator.

As described above, the steam turbine system 50 in this embodiment can be manufactured as a half speed machine, and thus the following benefits can be resulted according to this embodiment.

A first benefit is increase in temperatures of at least one of the main steam A, the first-stage reheated steam E, and the second-stage reheated steam F. Namely, in the conventional thermal power plant with a 2-pole generator (full speed machine), introducing excessively high temperature steam in turbine 2, especially high pressure turbine 8, first intermediate pressure turbine 9a, or second intermediate pressure turbine 9b,may cause a breakage of turbine moving blade. On the other hand, according to this embodiment, a centrifugal force generated on the turbine moving blade can be decreased because the rotational speed becomes a half of the full speed machine. Therefore, as compared with steam used in the full speed machine, the temperatures of the main steam A, the first-stage reheated steam E, and the second-stage reheated steam F can be increased.

The benefit of the centrifugal force decrease is significantly apparent in the high pressure turbine 8, the first intermediate pressure turbine 9a, and the second intermediate pressure turbine 9b to which a high-temperature steam, such as the main steam A, the first-stage, reheated steam E, or the second-stage reheated steam F is supplied. Although the temperature of the main steam A, the first-stage reheated steam E, or the second-stage reheated steam F is increased, a conventional material for these turbines can be consistently used in high pressure turbine 8, first intermediate pressure turbine 9a, and second intermediate pressure turbine 9b because centrifugal forces act on turbine moving blades of these turbines are reduced as a half of the conventional turbine plant having a 2-pole generator. Moreover, when applying better material than conventional material, the temperature of main steam A, first-stage reheated steam E, or second-stage reheated steam F is further increased.

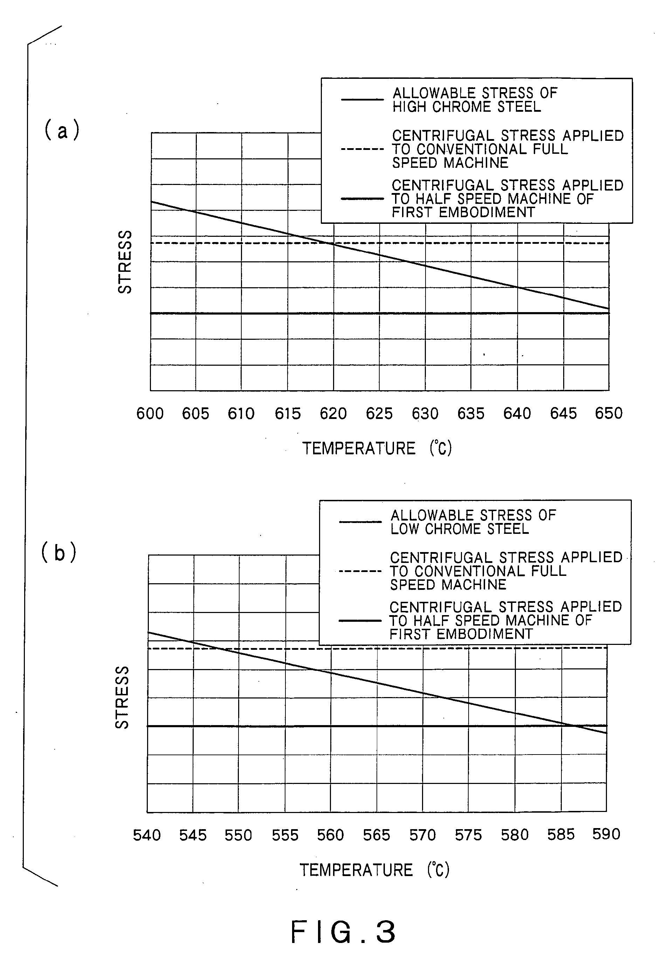

Fig. 3 is a graph showing a relationship between a centrifugal stress applied to a first-stage turbine moving blade of a high pressure turbine in a 60 Hz steam turbine system of a 1000 MW class, and an allowable stress of a high chrome steel and a low chrome steel. Fig. 3(a) is a case of a high chrome-containing steel alloy containing 8% to 15% of chrome, while Fig. 3(b) is a case of a low chrome-containing steel alloy containing less than or equal to 3% of chrome. As shown in Fig. 3(a), a centrifugal stress applied to the conventional full speed machine surpasses an allowable stress curve of a high chrome-containing steel alloy, at a steam temperature of about 620°C or more. On the other hand, since a centrifugal stress imposed on the turbine moving blade is reduced in this embodiment, the centrifugal stress does not surpass the allowable stress curve of a high chrome-containing steel alloy, even at a steam temperature of about 650°C.

Therefore, the conventional rotational shaft material of a high chrome-containing steel alloy containing 8% to 15% of chrome is used as a material for the rotational shafts of the high pressure turbine 8, the first intermediate pressure turbine 9a, and the second intermediate pressure turbine 9b, the main steam A generated in the boiler 1 and the reheated steams E and F generated in the reheaters 41 and 42 are preferably not less than 620°C, and most preferably about 650°C.

As shown in Fig. 3(b), a centrifugal stress applied to the conventional full speed machine surpasses an allowable stress curve of a low chrome-containing steel alloy, at a steam temperature of 545°C or more. On the other hand, since a centrifugal stress imposed on the turbine moving blade is reduced, the centrifugal stress does not surpass the allowable stress curve of a low chrome-containing steel alloy, even at a steam temperature of about 580°C.

As a result, the conventional rotational shaft material of a low chrome-containing steel alloy containing not more than 3% of chrome is used as a material for the rotational shafts of the high pressure turbine 8, the first intermediate pressure turbine 9a, and the second intermediate pressure turbine 9b, the main steam A generated by the boiler 1 and the reheated steams E and F generated by the reheaters 41 and 42 are preferably not less than 545°C, and most preferably about 580°C.

As described above, according to the steam turbine system (half speed machine) 50 in this embodiment, a power generation efficiency can be easily improved because steam having higher temperature, as compared to the conventional full speed machine, can be easily applied as the main steam A, the first-stage reheated steam E, and the second-stage reheated steam F.

It is generally known that, in a two-stage reheating cycle shown in Figs. 1 and 2, a strength conditions in first intermediate pressure turbine 9a or second intermediate pressure turbine 9b are very severe. However, according to this embodiment, a steam temperature can be easily increased in such a two-stage reheating cycle.

A second benefit according to the embodiment is reduction in pressure loss between the turbines.

In a conventional steam turbine system of a high output such as 250 MW or more, a two-flow exhaust type or four-flow exhaust type is used for a low pressure turbine. This is because a length of a turbine moving blade limited by the centrifugal force. In this type of turbine system having two-flow exhaust type or four-flow exhaust type low pressure turbine, a piping referred to as the crossover pipe (connecting pipe) 10 (see, Figs. 9 to 11) connects the intermediate pressure turbine 9 and the low pressure turbine 11. This type of turbine system, a pressure loss exists in around the crossover pipe (connecting pipe) 10 between a exhaust hood of the intermediate pressure turbine 9, which is disposed on an upstream of the crossover pipe (connecting pipe) 10, and an inlet (suction hood) of the low pressure turbine 11, which is disposed on a downstream of the crossover pipe (connecting pipe) 10. Thus, this pressure loss decreases a power generation efficiency of the plant.

On the other hand, since the steam turbine system 50 in this embodiment is rotated at a rotational speed which is one-half a rotational speed of the full speed machine, a centrifugal force applied to the turbine moving blade of the low pressure turbine 11 can be reduced. Thus, even in the steam turbine system 50 of a high output, a single flow exhaust can be used, and there is no need for using the crossover pipe (connecting pipe) 10 between second intermediate pressure turbine 9b and low pressure turbine 11. In addition, it is possible to accommodate the second intermediate pressure turbine 9b and the low pressure turbine 11 in a single casing, so as to constitute the intermediate and low pressure turbine 15 (see, Figs. 1 and 2). Therefore, a pressure loss between the turbines can be eliminated, to thereby improve a power generation efficiency.

The last-stage turbine moving blade of the low pressure turbine 11, which is manufactured based on the law of similitude, has an annular surface area that is four times as large as the last-stage turbine moving blade of the low pressure turbine 11 in the full speed machine. Thus, even when a single flow exhaust is used, the turbine moving blade has the annular surface area equivalent to a four-flow exhaust type low pressure turbine is used in the full speed machine.

A third benefit is further improvement in turbine efficiency because of a single flow discharge of steam exhausted from the low pressure turbine 11.

Similar to the conventional full speed machine, when a two-flow exhaust type or four-flow exhaust type is applied as the low pressure turbine 11 (see, Figs. 9 to 11), an amount of steams flowing into each flow path is divided and decreased, a blade length of an inlet side stage of the low pressure turbine 11 is shortened. This causes a lowering of an efficiency of the low pressure turbine 11.

On the other hand, in this embodiment, since an exhaust steam flow discharged from the low pressure turbine 11 can be a single flow, a blade length of an inlet side stage of the low pressure turbine 11 can be sufficiently elongated. As a result, efficiency in the low pressure turbine 11 can be improved.

A fourth benefit is a reduction in exhaust loss because of an axial discharge of stem from low pressure turbine 11. As described above, an axial discharge means that exhaust steam discharged from low pressure turbine 11 has a velocity component in a direction of rotational shaft (rotor).

Namely, as shown in Figs. 9 to 11, in the conventional steam turbine system 50 of a high output such as about 250 MW or more, exhaust steam discharged from the low pressure turbine flows downward toward the condenser 3, which is disposed underneath the low pressure turbine, as a downward exhaust.

On the other hand, according to this embodiment, since steam introduced to the low pressure turbine 11 can be made as a single flow, exhaust steam discharged from the last stage of the low pressure turbine 11 can also be as a single flow. Thus, exhaust steam discharged from the last stage of the low pressure turbine 11 can be axially discharged, i.e., in an axial direction of the rotational shaft of the intermediate and the low pressure turbine 15 having a velocity component of the axial direction. As a result, an exhaust loss of the turbine 2 can be decreased.

Accordingly, according to the steam turbine system 50 in this embodiment, even in a thermal power plant of a high output as large as 1000 MW, an exhaust steam discharged from a last stage of a low pressure turbine can be an axial-flow, whereby a power generation efficiency can be improved.

Moreover, by applying an axial-flow exhaust, a height of a turbine building can be reduced.

That is, in a conventional thermal power plant, a height of a turbine building can be reduced only in a low output using a small turbine, by applying an axial-flow exhaust as exhaust steam discharged from the turbine. However, in a conventional thermal power plant of a large output, an exhaust steam discharged from a turbine cannot be the axial-flow, because the exhaust steam is necessarily discharged under the low pressure turbine. Thus, the height of a turbine building is high.

On the other hand, according to this embodiment, since exhaust steam can be axially discharged (axial-flow) as described above, the height of the turbine building can be reduced even in a thermal power plant of a large output because there is no need providing the condenser under the low pressure turbine.

A fifth benefit is that an influence of erosion of the last-stage turbine moving blade of the low pressure turbine 11 can be reduced, which may be caused by condensed water droplets. Serious erosion of the last-stage turbine moving blade may result in an accident of scattering of the turbine moving blade. Thus, reduction of an influence of erosion is very important in terms of reliability.

In general, the faster a rotational speed of an end of a turbine moving blade is, the faster the erosion speed is. In this embodiment, since the turbine moving blade is designed based on the law of similitude, a rotational speed of the end of the turbine moving blade is equal to that of the conventional full speed machine, so that the erosion speed is the same. However, an allowable amount of erosion is in proportion to the size of the turbine moving blade. In other words, the larger the turbine moving blade is, the more resistance to the erosion the turbine moving blade has.

Specifically, since a size of the turbine moving blade in this embodiment is twice as large as that of the turbine moving blade of the conventional full speed machine, the resistance of the turbine moving blade in this embodiment is twice the resistance of the turbine moving blade of the full speed machine. Thus, an influence given by erosion of the last-stage turbine moving blade of the low pressure turbine 11, which is caused by condensed water droplets, can be reduced by half.

A sixth benefit is further improvement of turbine efficiency because of increase of the allowable maximum number of the stages of the respective turbines 8, 9a 9b, and 11.

Generally, the larger the number of stages of the turbines 8, 9a, 9b, and 11, the higher efficiency of turbine can be achieved. When increasing the number of stages in the turbines 8, 9a, 9b or 11, the rotational shafts of the corresponding turbines 8, 9a, 9b, or 11 have to be elongated. However, it is also generally known that the longer a rotational shaft of a turbine becomes, the less stability, as a rotational machine, the turbine has. For this reason, the number of the stages disposed in the turbines 8, 9a, 9b, and 11 is limited to the allowable number of stages that is determined by taking the stability of the turbine into consideration.

With respect to this point, according to this embodiment, the rotational speeds of the turbines 8, 9a, 9b, and 11 are one-half of the rotational speed of the full speed machine. Thus, when the turbines 8, 9a, 9b, and 11 in this embodiment have the same rotational shafts lengths as those of the turbines of the full speed machine, stability as a rotational machine of the turbines 8, 9a, 9b, and 11 can be improved. In other words, even when the lengths of the rotational shafts of the turbines 8, 9a, 9b, and 11 are elongated, stability as a rotational machine can be substantially the same as that of the full speed machine. As a result, the allowable number of stages can be increased, to thereby improve turbine efficiency.

A seventh benefit is reduction in size of the turbine building because of a reduction of the full length of the steam turbine system 50.

Conventionally, a steam turbine system 50 of a 1000 MW class has to be of a cross-compound type as shown in Fig. 11, or of a tandem compound type as shown in Fig. 9.

As shown in Fig. 11, the steam turbine system 50 of a cross-compound type, the high pressure turbine (single flow) 8, intermediate pressure turbine (double flow) 9, and the 2-pole generator 12 are coupled so as to have a common rotational shaft, and two low pressure turbines (double flow) 11 and the 4-pole generator 13 are coupled so as to have another rotational shaft. Namely, four casings for turbines 8, 9, 11, and two generators 12 and 13 are needed,

Meanwhile, as shown in Fig. 9, in the steam turbine system 50 of a tandem compound type, high pressure turbine (single flow) 8, intermediate pressure turbine (double flow) 9, two low pressure turbines (double flow) 11, and the 2-pole generator 7 are coupled so as to have a common rotational shaft. Namely, four casing turbines 8, 9, and 11, and one generator 7 are needed.

The reason that the low pressure turbines 11 are of four-flow type in total, which comprises two of double flow low pressure turbine 11, is that the size of the last stage Is limited by a centrifugal force applied to the turbine moving blade, as described above. The reason that the intermediate pressure turbine 9 is of double flow type is also a strict limitation by a centrifugal force.

On the other hand, in this embodiment, a centrifugal force applied to the turbine 2 can be reduced as described above. Thus, as shown in Figs. 1 and 2, even In a case where a two-stage reheating cycle is employed, the high pressure turbine (single flow) 8, the first intermediate pressure turbine (single flow) 9a, the intermediate and low pressure turbine (single flow) 15, and the 4-pole generator 13 can be coaxially arranged. That is, three casing turbines 8, 9a, and 15 and one 4-pole generator 13 are needed for relatively large capacity power generation plant such a 1000 MW class plant. Thus, an installation space of the steam turbine system 50 according to this embodiment can be reduced. Furthermore, maintainability can be improved because of reduction of space of the steam turbine system 50.

It should be noted that the steam turbine system 50 in this embodiment shown in Figs. 1 and 2 is a 2-stage reheating type, while the conventional turbine system 50 shown in Figs. 9 and 11 is of a 1-stage reheating type.

In the above-described embodiment, temperatures of the main steam A, the first-stage reheated steam E, and the second-stage reheated steam F can be up to 650°C, as described. When using these steams of 650°C as steam A, E, and F in steam turbine system 50 according to this embodiment, a net thermal efficiency can be expected as 45%. As compared with the existing reheating and regenerative thermal power plant, about 10% of improvement in power generation in relative ratio may be achieved.

In Figs. 1 and 2, the steam turbine system 50 in this embodiment is shown as a system of a two-stage reheating type in which the first-stage reheater 41 and the second-stage reheater 42 are provided in the boiler 1, and the first-stage reheated steam E and the second-stage reheated steam F are introduced therefrom into the first-stage intermediate pressure turbine 9a and the second-stage intermediate pressure turbine 9b, respectively. However, the steam turbine system 50 may be of a plural-stage reheating type, by providing additional reheaters and intermediate pressure turbines, so that reheated steams of plural stages are respectively introduced into the different intermediate pressure turbines.

In this case, it is possible to successively position, without any connecting pipe, at least an intermediate pressure turbine of a last stage, into which a reheated steam of a last stage is introduced, and a low pressure turbine that discharges a steam into a condenser as exhaust steam.

In the above embodiment, 4-pole generator 13, as a generator having more than two poles, is applied to steam turbine system 50. However, the embodiment, generator is not limited to 4-pole generator 13, any generator having more than two poles may be applied.

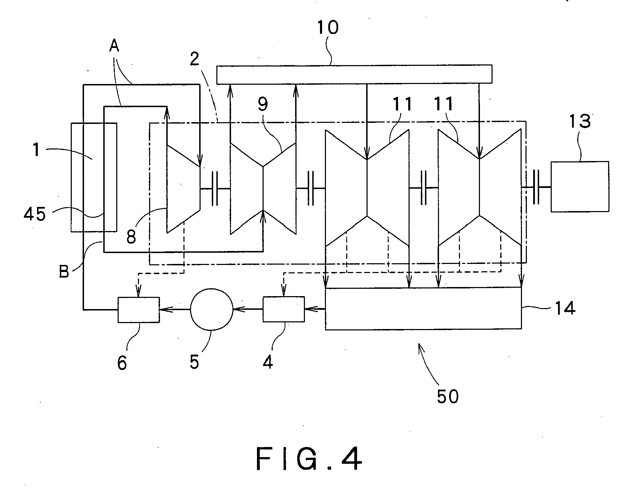

In addition, in the above embodiment, the low pressure turbine 11 is of an axial-flow exhaust type. However, not limited thereto, an exhaust steam from the low pressure turbine 11 may be discharged downward, as shown in Fig. 4, for example. In this case, some of above benefits are not achieved, however, steam turbine system 50 may achieve much larger capacity as compared to conventional steam turbine system.

Similar to the steam turbine system 50 shown in Figs. 1 and 2, a steam turbine system 50 shown in Fig. 4 includes a boiler 1, a turbine 2, a condenser 14, and a 4-pole generator 13. As shown in Fig. 4, the boiler 1 is provided with only one reheater 45 that reheats a main steam A discharged from a high pressure turbine 8 so as to generate a reheated steam B. The turbine 2 includes the high pressure turbine 8, an intermediate pressure turbine 9, and low pressure turbines 11. In Fig. 4, there is provided a crossover pipe (connecting pipe) 10 for introducing a steam discharged from the intermediate pressure turbine 9 into the low pressure turbines 11.

As shown in Fig. 4, in a power train of the steam turbine system 50, there are uniaxially arranged the high pressure turbine 8, the intermediate pressure turbine 9, the low pressure turbines 11, and the 4-pole generator 13 which are connected to each other in this order. That is, rotational shafts of the high pressure turbine 8, the intermediate pressure turbine 9, the low pressure turbines 11, and the 4-pole generator 13 are coupled with each other to form a uniaxial structure. Thus, the steam turbine system 50 has the common and single rotational shaft.

The rotational shaft of the 4-pole generator 13 is connected to the rotational shafts of the low pressure turbines 11, and the 4-pole generator 13 is disposed adjacent to the high pressure turbines 11,

As shown in Fig. 4, the condenser 14 is disposed under the low pressure turbines 11. Similar to the steam turbine system 50 shown in Fig. 1, a water from the condenser 14 is introduced into a low-pressure feed water heater 4, a feed water pump 5, and a high-pressure feed water heater 6, in this order, and is returned to the boiler 1 as a feed water.

As described above, the example shown in Fig. 4, turbine system 50 has a crossover pipe (connecting pipe) 10, and condenser 14 is provided under low pressure turbine 11, so that the exhaust steam from low pressure turbine 11 flows downwardly into condenser 14 as a downward flow. However, since 4-pole generator 13 is also applied to this example, the temperatures of at least one of the main steam A, the first-stage reheated steam E, and the second-stage reheated steam F can be also increased as described above. Furthermore, since centrifugal force act on the rotational shaft is lower than conventional turbine system, longer blade can be applied to the turbine 2 of the turbine system 50 so that turbine system 50 having much larger capacity, as compared to the conventional turbine system, can be easily achieved.

### Second Embodiment

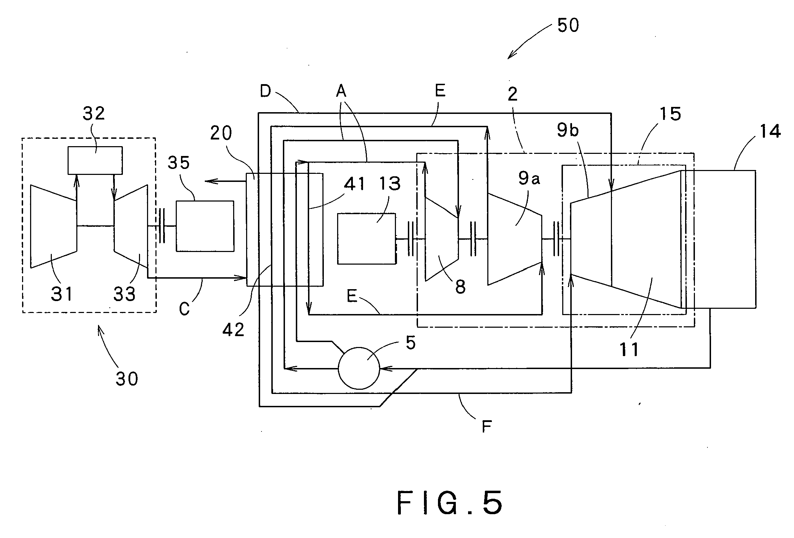

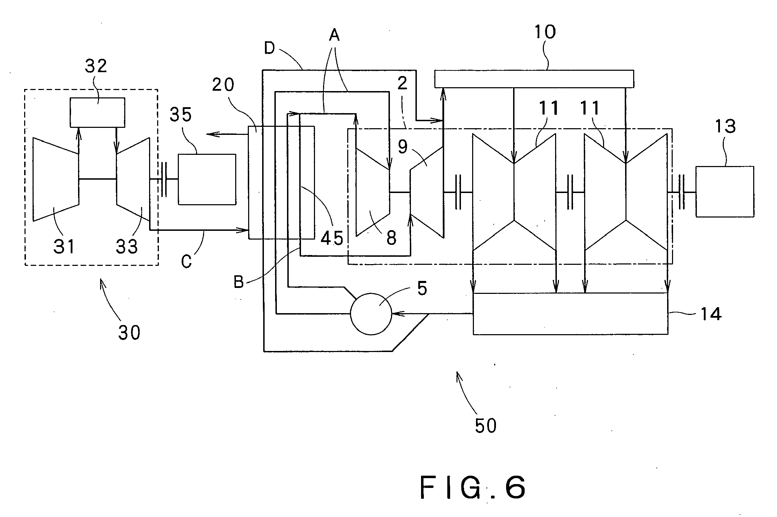

Next, a second embodiment of the present invention is described with reference to Figs. 5 and 6. The second embodiment shown in Figs. 5 and 6 is a so-called combined cycle plant in which a gas turbine system 30 is combined with the steam turbine system 50 in the first embodiment shown in Fig. 1. The gas turbine system 30 includes: a compressor 31 that compresses air; a combustor 32 that burns a fossil fuel such as natural gas with the air compressed by the compressor 31, so as to generate a combustion gas; a gas turbine 33 that is driven by the combustion gas generated by the combustor 32; and a gas turbine generator 35 connected to the bas turbine 33. As a boiler for heating a feed water to generate a main steam by using a heat caused by combustion of fossil fuel, In this embodiment, steam turbine system 50 comprises heat recovery steam generator (HRSG) 20, in place of the boiler 1, in the first embodiment shown in Fig. 1. Heat recovery steam generator (HRSG) 50 has a heater that heats a feed water to generate a main steam A by utilizing an exhaust gas C discharged from the gas turbine system 30 as a heat source. Heat recovery steam generator (HRSG) 20 includes first reheater 41 and second reheater 42. Further, this embodiment shown in Figs. 5 and 6 does not have the high-pressure feed water heater 6 and the low-pressure feed water heater 4 as the regenerative heat exchangers. Other structure of this embodiment is substantially the same as that of the first embodiment shown in Figs. 1 to 4.

In the second embodiment shown in Figs. 5 and 6, the same reference numbers are used as the same elements described in the first embodiment in reference to Figs. 1 to 4, and their detailed description is omitted.

At first, a part of a water (feed water) supplied from the feed water pump 5 is heated in heat recovery steam generator (HRSG) 20 by utilizing the heat of the exhaust gas C of the gas turbine 33 as a heat source, so that a main steam A is generated (see, Fig. 5).

Then, the main steam A is expanded in the high pressure turbine 8 so as to generate work. The exhaust steam discharged from the high pressure turbine 8 is introduced to a first reheater 41 in heat recovery steam generator (HRSG) 20 (see, Fig. 5).

Another part of the feed water supplied from the feed water pump 5 is introduced to heat recovery steam generator (HRSG) 20, and is heated there to become steam. Thereafter, the steam is mixed with the exhaust steam discharged from the high pressure turbine 8. Then, the mixed steam enters into the first reheater 41 in heat recovery steam generator (HRSG) 20. In heat recovery steam generator (HRSG) 20, the steam is reheated by utilizing the heat of the exhaust gas C of the gas turbine 33 so as to generate a first-stage reheated steam E (see, Fig 5).

Then, the first-stage reheated steam E is introduced to a first intermediate pressure turbine 9a. In first intermediate pressure turbine 9a, the first-stage reheated steam E is expanded so as to generate work. The first-stage reheated steam E discharged from the first intermediate pressure turbine 9a returns again to heat recovery steam generator (HRSG) 20. The first-stage reheated steam E discharged from first stage intermediate pressure turbine 9a is reheated In a second reheater 42 in heat recovery steam generator (HRSG) 20 by utilizing the heat of the exhaust gas C of the gas turbine 33, so that it becomes a second-stage reheated steam F (see, Fig. 5).

Then, the second-stage reheated steam F is introduced into a second intermediate pressure turbine 9b. In second intermediate pressure turbine 9b, the second-stage reheated steam E is expanded so at to generate work. Thereafter, the second-stage reheated steam E discharged from the second intermediate pressure turbine 9b is mixed with a low pressure steam D which has been introduced into second intermediate pressure turbine 9b at a position of a boundary between the second intermediate pressure turbine 9b and the low pressure turbine 11. Here, the boundary between second intermediate pressure turbine 9b and the low pressure turbine 11 can be a position where second intermediate pressure turbine 9b and the low pressure turbine 11, are connected to each other. Accordingly, The mixed steam of the second-stage reheated steam F discharged from second intermediate pressure turbine 9b and the low-pressure steam D enters into the low pressure turbine 11 in which the steam is further expanded to generate work. The low pressure steam D is generated by heating low-pressure feed water in heat recovery steam generator (HRSG) 20. Here, the low-pressure feed water having been supplied to heat recovery steam generator (HRSG) 20 from a branched position on an upstream side of the feed water pump 5 (see, Fig 5).

Then, the steam, which has completed a work in the low pressure turbine, is discharged and introduced into the condenser 14 where the steam is cooled and condensed to become water (condensate) (see, Fig. 5).

Subsequently, the water from the condenser 14 (condensate) is branched at an upstream position and a downstream position of the feed water pump 5, so as to become waters of different pressures, namely, a high pressure feed water, an intermediate pressure feed water, and a low pressure feed water, which are then returned to heat recovery steam generator (HRSG) 20 (see, Fig. 5).

Also in the combined thermal power plant in this embodiment, which the gas turbine system 30 and the steam turbine system 50 are combined, steam turbine system 50 includes the 4-pole generator (generator having more than two poles) 13. So, a rotational speed of the steam turbine system 50 can be reduced to half (a half speed machine) as compared with the rotational speed of a conventional steam turbine system (full speed machine), similar to the first embodiment. Thus, according also to this embodiment, the same benefits as those in the first embodiment can be resulted.

That is to say, a length of the turbine moving blade of the last stage can be doubled as compared with that of the conventional full speed machine, based on the low of similitude.

In addition, an exhaust steam discharged from the low pressure turbine 11 can be axially discharged as a single flow. The second intermediate pressure turbine 9b and the low pressure turbine 11 are adjacently provided without using a connecting pipe such as the crossover pipe (connecting pipe) 10 (see, Figs. 9 to 11)in a single casing as an intermediate and low pressure turbine 15. Thus, a pressure loss between the second intermediate pressure turbine 9b and the low pressure turbine 11 can be eliminated.

Further, since the steam turbine system 50 is a half speed machine, a centrifugal force act on the turbine moving blade can be reduced. Thus, even in a two-stage reheating cycle, whose strength condition is generally severe, a steam temperature of steam introduced to first and second intermediate pressure turbine 9a and 9b can be increased, whereby a thermal efficiency can be easily enhanced.

Furthermore, since the steam turbine system 50 is a half speed machine, a length of the turbine moving blade can be elongated. An exhaust loss of the turbine 2 can be further reduced by applying the last stage turbine moving blades having a sufficient annular surface area in low pressure turbine 11, with axial-flow exhaust type configuration of low pressure turbine 11.

Moreover, since the steam turbine system 50 is a half speed machine, stability of the turbines 8, 9a, 9b, and 15 can be increased. Thus, the number of stages disposed in turbines 8, 9a, 9b, and 15 can be increased, so that a turbine efficiency can be improved.

It is not necessary to synchronize the gas turbine generator 35 of the gas turbine system 30 and the 4-pole generator 13 of the steam turbine system 50, because these generators are disposed in the separate systems. A rotational speed of the gas turbine system 30 may be suitably selected, such as a full speed or a half speed. When the gas turbine generator 35 of the gas turbine system 30 is a 4-pole generator, a thermal power plant is possible in which the rotational shafts of the gas turbine system 30 and the steam turbine system 50 are uniaxially connected to each other. In this case, 4-pole generator 13 can be an only generator which is coupled with gas turbine system 30 and steam turbine system 50.

In the above embodiment, the low pressure turbine 11 is of an axial-flow exhaust type. However, not limited thereto, an exhaust steam from the low pressure turbine 11 may be discharged downward, as shown in Fig. 6, for example.

As shown in Fig. 6, the steam turbine system 50 in this thermal power plant Includes heat recovery steam generator (HRSG) 20, the high pressure turbine 8, a reheater 45 provided in heat recovery steam generator 20, the intermediate pressure turbine 9 and the low pressure turbine 11. Heat recovery steam generator (HRSG) 20 heats a part of a water (feed water) supplied from the feed water pump 5 to generate a main steam A by utilizing the exhaust gas C discharged from the gas turbine system 30 as a heat source. The main steam A from heat recovery steam generator (HRSG) 20 is introduced to high pressure turbine 8, which has a rotational shaft. Reheater 45 reheats the mixed steam, which are mixture of the main steam A discharged from the high pressure turbine 8 and steam generated by heating another part of the feed water supplied from the feed water pump 5, in heat recovery steam generator (HRSG) 20 so as to generate a reheated steam B. The reheated steam B reheated by the reheater 45 is introduced to intermediate pressure turbine 9. The steam discharged from the intermediate pressure turbine 9 is Introduced through a crossover pipe (connecting pipe) 10 into low pressure turbine 11. Here, the steam, which is discharged from the intermediate pressure turbine 9 into the crossover pipe (connecting pipe) 10, is mixed with a low-pressure steam D from heat recovery steam generator (HRSG) 20.

As shown in Fig. 6, 4-pole generator 13 is provided in steam turbine system 50 so that a rotational shaft of 4-pole generator 13 is coupled with the rotational shafts of the high pressure turbine 8, the intermediate pressure turbine 9, and the low pressure turbines 11. So, also in the example shown in Fig. 6, in a power train of the steam turbine system 50, the high pressure turbine 8, the intermediate pressure turbine 9, the low pressure turbines 11, and the 4-pole generator 13 are connected to each other In this order. That is, the rotational shafts of the high pressure turbine 8, the first intermediate pressure turbine 9a, the Intermediate and low pressure turbine 15, and the 4-pole generator 13 are coupled with each other to form a uniaxial structure. Thus, the steam turbine system 50 has the common and single rotational shaft.

As shown in Fig. 6, the condenser 14 is disposed under the low pressure turbines 11. Water condensed by the condenser 14 is introduced into the feed water pump 5 and pressurized as a feed water. The feed water which is pressurized in the feed water pump 5 returns to heat recovery steam generator (HRSG) 20.

### Third Embodiment

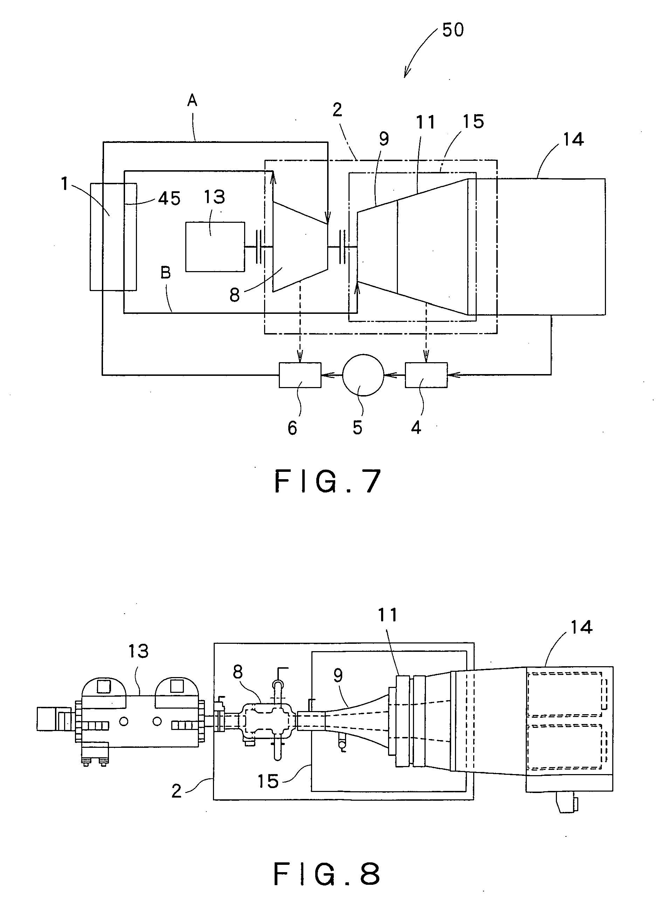

A third embodiment of the present invention is described with reference to Figs. 7 and 8. The third embodiment shown in Figs. 7 and 8 is a steam turbine system 50 of a single-stage reheating type, which only includes one intermediate pressure turbine 9a. In other words, steam turbine system according to this embodiment eliminates the first intermediate pressure turbine 9a from the first embodiment as shown in Figs. 1 and 2. Other structure of this embodiment is substantially the same as that of the first embodiment shown in Figs. 1 to 4. An intermediate pressure turbine 9 in this embodiment corresponds to the second intermediate pressure turbine 9b in the first embodiment. In this embodiment, only one reheater 45 is provided in boiler 1.

In Figs. 7 and 8, the intermediate pressure turbine 9 and a low pressure turbine 11 received in a single casing constitutes an intermediate and low pressure turbine 15. The turbine into which a reheated steam is defined as the intermediate pressure turbine 9, and the turbine that allows a steam as an exhaust steam to flow into a condenser 14 is defined as the low pressure turbine 11. In this case, similar to the first embodiment, it is not necessary to strictly separate the Intermediate pressure turbine 9 and the low pressure turbine 11.

In the third embodiment shown in Figs. 7 and 8, the same reference numbers are used for the same parts described in the first embodiment shown in Figs. 1 to 4, and their detailed description is omitted.

At first, a part of a water (feed water) supplied from a feed water pump 5 to a boiler 1 is heated so that a main steam A is generated. The main steam A, discharged from a high pressure turbine 8, is reheated by the reheater 45 in the boiler 1 so as to generate a reheated steam B. The reheated steam B then enters into the intermediate pressure turbine 9 (see, Fig 7).

Then, the reheated steam B discharged from the intermediate pressure turbine 9 flows into the low pressure turbine 11 disposed adjacent to the intermediate pressure turbine 9. Here, inter mediate pressure turbine 9 and low pressure turbine 11 is provided in a single casing, which constitute as an intermediate and low pressure turbine 15. Thereafter, the reheated steam B expanded in inter mediate pressure turbine 9 and low pressure turbine 11 is discharged from low pressure turbine 11 (intermediate and low pressure turbine 15) into a condenser 14 where the discharged reheated steam B becomes water as a condensate (see, Fig. 7).

Then, the water (condensate) supplied from the condenser 14 is heated in a low-pressure feed water heater 4 by utilizing a steam extracted from the low pressure turbine 11 as a heat source. Following thereto, the feed water heated in the low-pressure feed water heater 4 is introduced to a feed water pump 5 and pressurized. Then, the feed water pumped (pressurized) in the feed water pump 5 is introduced into and heated in a high-pressure feed water heater 6 by utilizing a steam extracted from the high pressure turbine 8 as a heat source. Feed water heated in high-pressure feed water heater 8 then returns to the boiler 1 (see, Fig. 7).

Also in the thermal power plant in this embodiment, steam turbine system 50 includes a 4-pole generator 13 as a generator having more than two poles. Since the 4-pole generator (generator having more than two poles) 13 is used, a rotational speed of the steam turbine system 50 can be reduced to half (half speed machine) as compared with a full speed machine, similar to the first embodiment. Thus, according also to this embodiment, the same benefits as those in the first embodiment can be resulted.

That is to say, a length of the turbine moving blade of the last stage can be doubled as compared with that of the conventional full speed machine, due to application of the low of similitude.

In addition, an exhaust steam discharged from the low pressure turbine 11 can axially discharged as a single flow. The second intermediate pressure turbine 9b and the low pressure turbine 11 are adjacently provided without using a connecting pipe such as the crossover pipe (connecting pipe) 10 (see, Figs. 9 to 11)in a single casing as an intermediate and low pressure turbine 15. Thus, a pressure loss between the intermediate pressure turbine and the low pressure turbine 11 can be eliminated.

Further, since the steam turbine system 50 is a half speed machine, a centrifugal force act on the turbine moving blade can be reduced. Thus, a steam temperature can be Increased, whereby a thermal efficiency can be easily enhanced,

Furthermore, since the steam turbine system 50 is a half speed machine, a length of the turbine moving blade can be elongated. An exhaust loss of the turbine can be further reduced by applying the last stage turbine moving blades having a sufficient annular surface area in low pressure turbine 11, with axial-flow exhaust type configuration of low pressure turbine 11.

Moreover, since the steam turbine system 50 is a half speed machine, stability of the turbine 8, 9, or 15 can be increased. Thus, the number of stages disposed in turbine 8, 9, or 15 can be increased, so that a turbine efficiency can be improved.

As shown in Figs. 7 and 8, the steam turbine system 50 in this embodiment is the steam turbine system 50 of a one-stage reheating type including the high pressure turbine (single flow) 8, the intermediate and low pressure turbine (single flow) 15, and the 4-pole generator 13, which are uniaxially arranged. Thus, the steam turbine system 50 is composed of two casings of turbines 8 and 15, and one 4-pole generator 13. Because two turbine casings for turbines 8, 15 and one 4-pole generator 13 are required for steam turbine system 50 according to this embodiment, an installation space of the steam turbine system 50 can be reduced. Furthermore, maintainability can be improved because of reduction of space of the steam turbine system 50.

## Claims

1. A thermal power plant comprising:
a boiler that heats a feed water by utilizing a heat caused by combustion of a fossil fuel so as to generate a main steam;
a high pressure turbine into which the main steam from the boiler is introduced, the high pressure turbine having a rotational shaft;
a reheater that reheats the main steam discharged from the high pressure turbine so as to generate a reheated steam;
an intermediate pressure turbine into which the reheated steam generated by the reheater is introduced, the intermediate pressure turbine having a rotational shaft that is coupled with the rotational shaft of the high pressure turbine;
a low pressure turbine into which the reheated steam discharged from the Intermediate pressure turbine is introduced, the low pressure turbine having a rotational shaft that coupled with the rotational shafts of the high pressure turbine and the intermediate pressure turbine; and
a generator having more than two poles, and having a rotational shaft that is coupled with the rotational shafts of the high pressure turbine, the intermediate pressure turbine, and the low pressure turbine.

2. The thermal power plant according to claim 1, further comprising a heat exchanger that heats a feed water to be introduced into the boiler, by utilizing a steam extracted from at least one of the high pressure turbine, the intermediate pressure turbine, and the low pressure turbine.

3. The thermal power plant according to claim 1, further comprising a gas turbine system including: a compressor that compresses air; a combustor that burns a fuel with the air compressed by the compressor so as to generate a combustion gas; a gas turbine that is driven by the combustion gas generated by the combustor; and a gas turbine generator connected to the gas turbine;
wherein the boiler is a heat recovery steam generator that heats the feed water by utilizing a heat of an exhaust gas discharged from the gas turbine system so as to generate a main steam.

4. The thermal power plant according to claim 1, wherein
an exhaust steam is discharged as a single flow from the low pressure turbine.

5. The thermal power plant according to claim 4, wherein
the exhaust steam is discharged in an axial direction from the low pressure turbine.

6. The thermal power plant according to claim 1, wherein
the generator is a 4-pole generator.

7. The thermal power plant according to claim 1, comprising a plurality of reheaters and a plurality of intermediate pressure turbines, wherein
reheated steam generated by the reheaters are introduced into the intermediate pressure turbines respectively.

8. The thermal power plant according to claim 1, wherein
the intermediate pressure turbine and the low pressure turbine are successively positioned without any connecting pipe.

9. The thermal power plant according to claim 1, wherein:
at least one of the main steam generated by the boiler and the reheated steam generated by the reheater is 620°C or higher; and
at least one of the rotational shafts of the high pressure turbine and the intermediate pressure turbine into which the steam of 620°C or higher is introduced is made of a material containing 8% to 15% of chrome.

10. The thermal power plant according to claim 1, wherein:
at least one of the main steam generated by the boiler and the reheated steam generated by the reheater is 545°C or higher; and
at least one of the rotational shafts of the high pressure turbine and the intermediate pressure turbine into which the steam of 545°C or higher is introduced is made of a material containing no more than 3% of chrome.
